(19) Europäisches Patentamt
European Patent Office
Office européen des brevets

(11) Veröffentlichungsnummer: **0 111 450**
**A1**

(12) # EUROPÄISCHE PATENTANMELDUNG

(21) Anmeldenummer: **83810567.4**

(22) Anmeldetag: **05.12.83**

(51) Int. Cl.³: **C 09 B 29/42**
//D06P1/18

(30) Priorität: **09.12.82 CH 7165/82**

(43) Veröffentlichungstag der Anmeldung:
**20.06.84 Patentblatt 84/25**

(84) Benannte Vertragsstaaten:
**CH DE FR GB LI**

(71) Anmelder: **CIBA-GEIGY AG**
**Postfach**
**CH-4002 Basel(CH)**

(72) Erfinder: **Liechti, Peter, Dr.**
**Alte Olsbergerstrasse 17**
**CH-4411 Arisdorf(CH)**

(54) **Monoazoverbindungen.**

(57) Neue Verbindungen der Formel

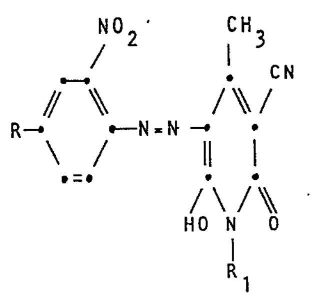

worin R und $R_1$ die im Anspruch 1 angegebene Bedeutung haben, Verfahren zu deren herstellung und deren Verwendung als Farbstoffe zum Färben und Bedrucken von vor allem Polyestermaterialien wobei man egale gelbe Ausfärbungen erhält die insbesondere durch eine gute pH-Stabilität und einer sehr guten Reibechtheit gekennzeichnet sind.

EP 0 111 450 A1

CIBA-GEIGY AG
Basel (Schweiz)

1-14217/-

# Monoazoverbindungen

Die Erfindung betrifft neue Monoazoverbindungen, ein Verfahren zu deren Herstellung und deren Verwendung als Farbstoffe zum Färben und Bedrucken von halbsynthetischem und voll synthetischem hydrophobem Fasermaterial.

Die neuen Monoazoverbindungen entsprechen der Formel I

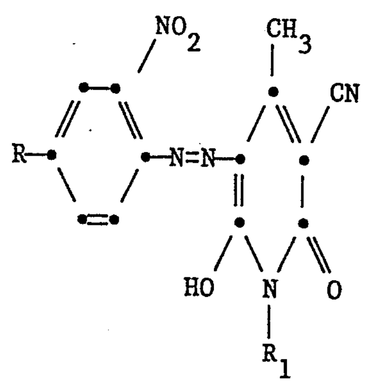

(I)

worin bedeuten:

R ein Halogenatom, und

$R_1$ einen unverzweigten $C_8$-, $C_{10}$- und $C_{12}$-Alkylrest.

R in der Bedeutung eines Halogenatoms stellt z.B. das Fluor-, Chlor- oder Bromatom dar. In bevorzugten Verbindungen bedeutet R das Chloratom.

In bevorzugten Verbindungen bedeutet $R_1$ einen unverzweigten $C_{10}$ oder $C_{12}$-Alkylrest.

Die Herstellung der neuen Verbindungen der Formel I erfolgt nach bekannten Methoden, beispielsweise derart, dass man eine Diazokomponente der Formel II

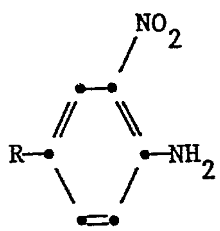

(II)

diazotiert und auf eine Kupplungskomponente der Formel III

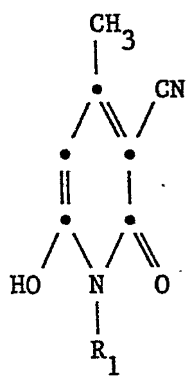

(III)

kuppelt, in welchen Formeln II und III R und $R_1$ die unter Formel I angegebene Bedeutung haben.

Die Amine der Formel II und ebenso die Pyridone der Formel III sind bekannt, oder können nach bekannten Methoden hergestellt werden. Ebenso erfolgen die Diazotierungs- und Kupplungsreaktion nach bekannter Art und Weise wie z.B. beschrieben in Ullmanns Encyklopädie der technischen Chemie, Bd. 5 (1954) Seite 783 ff.

Verwendung finden die erfindungsgemässen Verbindungen vor allem als Farbstoffe zum Färben und Bedrucken von halbsynthetischen und vor allem synthetischen hydrophoben Textilmaterialien oder von Gemischen von Textilmaterialien die halbsynthetische bzw. synthetische hydrophobe Textilmaterialien enthalten.

Als halbsynthetische Textilmaterialien kommen vor allem Cellulose 2-1/2 Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Aethylenglykol oder Kondensationsprodukten aus Terephthalsäure und 1,4-Bis-(hydroxymethyl)-hexahydrobenzol; Polycarbonate, z.B. solchen aus α,α-Dimethyl-4,4'-dihydroxy-diphenylmethan und Phosgen, Fasern auf Polyvinylchlorid Basis sowie Polyamid-Basis.

Die Applikation der erfindungsgemässen Farbstoffe auf den Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nicht-ionischen Dispergiermitteln und gegebenenfalls üblichen Quellmitteln (Carrier) bei Temperaturen zwischen 80 und 140° C. Cellulose-2-1/2-acetat färbt man vorzugsweise zwischen ungefähr 65 bis 85° C und Cellulosetriacetat bei Temperaturen bis zu 115° C.

Die neuen Farbstoffe färben im Färbebad gleichzeitig anwesende Wolle und Baumwolle nicht oder nur wenig an (sehr gute Reserve) so dass sie auch gut zum Färben von Polyester/Wolle- und Polyester/Cellulosefaser-Mischgeweben verwendet werden können.

Die erfindungsgemässen Farbstoffe eignen sich ferner zum Färben nach dem Thermosol-Verfahren.

Das genannte Textilmaterial kann dabei in den verschiedensten Verarbeitungsformen vorliegen wie z.B. als Faser, Faden oder Vlies, als Gewebe oder Gewirke.

Es ist vorteilhaft die erfindungsgemässen Farbstoffe vor ihrer Verwendung in ein Farbstoffpräparat überzuführen. Hierzu wird der Farbstoff vermahlen, so dass seine Teilchengrösse im Mittel zwischen 0,01 und 10 Mikron beträgt. Das Vermahlen kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet.Mit den so erhaltenen Präparaten kann man nach Zugabe von Wasser färben und bedrucken.

Beim Bedrucken wird man die üblichen Verdickungsmittel verwenden, z.B. modifizierte oder nichtmodifizierte natürliche Produkte, beispielsweise Alginate, Britishgummi, Gummi arabicum, Kristallgummi, Johannisbrotkernmehl, Tragant, Carboxymethylcellulose, Hydroxyäthylcellulose, Stärke oder synthetische Produkte beispielsweise Polyacrylamide, Polyacrylsäure oder deren Copolymere oder Polyvinylalkohole.

Die erfindungsgemässen Farbstoffe sind praktisch unempfindlich gegen Carrier und verleihen den genannten Materialien, vor allem dem Polyestermaterial, gelbe egale Farbtöne von sehr guten Gebrauchs-Echtheiten, wie vor allem guter Lichtechtheit, guter Sublimierechtheit, Thermofixier-, Plissier-, Chlor- und Nassechtheit wie Wasser-,Schweiss- und Waschechtheit; die Ausfärbungen sind ferner gekennzeichnet durch eine gute pH-Stabilität und sehr gute Reibechtheit.

Die erfindungsgemässen Farbstoffe können auch gut verwendet werden zur Herstellung von Mischnuancen zusammen mit anderen Farbstoffen.

Die folgenden Beispiele veranschaulichen die Erfindung ohne sie darauf zu limitieren; Temperaturen sind in Grad Celsius angegeben; Teile (T) bedeuten, sofern nichts anderes angegeben ist, Gewichtsteile.

Beispiel 1: 5,2 g 4-Chlor-2-nitroanilin werden in 45 ml Wasser und 11 g konzentrierter Salzsäure unter Eiskühlung innerhalb von ca. 1 Stunde mit 7,5 ml einer 4-n wässrigen Natriumnitrit-Lösung diazotiert. Nach zweistündigem Nachrühren bei 4-5° wird die Diazolösung klärfiltriert und nach Zerstörung der überschüssigen salpetrigen Säure mit Sulfaminsäure innerhalb von 30 Minuten in eine Lösung von 7,9 g N-n-Octyl-3-cyan-4-methyl-5-hydroxy-pyridon(2) in 180 ml Dimethylformamid laufen gelassen. Nach weiteren 45 Minuten Nachrühren bei Raumtemperatur ist die Kupplung beendet. Man filtriert, wäscht mit Wasser neutral und trocknet im Vakuum bei 70° C, wobei man folgenden Farbstoff erhält:

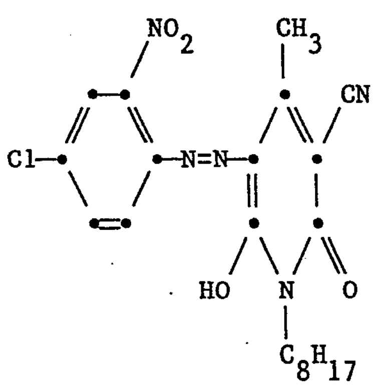

(Smp.: 142 bis 143°)

Verfährt man analog der Arbeitsweise dieses Beispiels verwendet jedoch die in folgender Tabelle in Kol. II aufgeführten Kupplungskomponenten so erhält man die in Kol. III genannten Farbstoffe die den in Kol. IV verzeichneten Schmelzpunkt (Smp.) aufweisen:

Tabelle

| I | II | III | IV |
|---|---|---|---|
| Bsp. Nr. | Kupplungskomponente Nr. 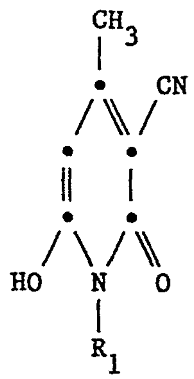 $R_1$ = | Farbstoff | Smp.. |
| 2 | $-(CH_2)_9-CH_3$ | 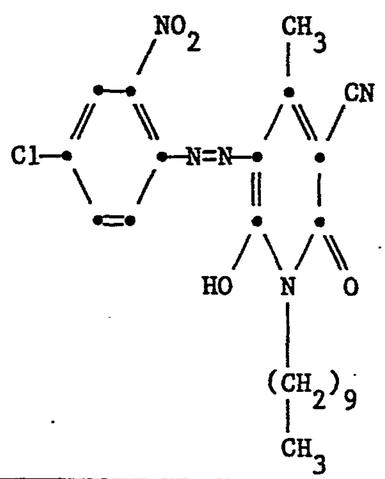 | 130 - 132° |
| 3 | $-(CH_2)_{11}-CH_3$ | 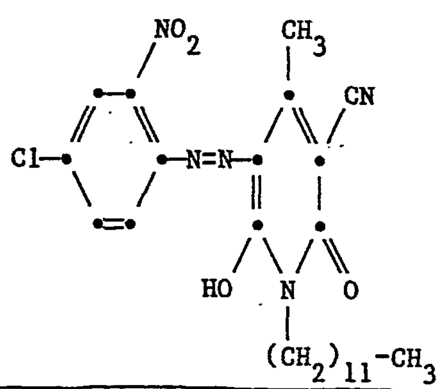 | 119 - 121° |

Beispiel 4: 1 T des gemäss Beispiel 1 erhaltenen Farbstoffes werden mit 2 T einer 50%-igen wässerigen Lösung des Natriumsalzes der Dinaphthylmethandisulfonsäure nass vermahlen und getrocknet.

0,012 T dieses Farbstoffpräparates werden mit 0,1 T Oleylmethyltaurid- Natriumsalz, 0,1 T Dinaphthylmethandisulfonsäure-Natriumsalz und 0,5 T Ammonsulfat verrührt. Durch Verdünnen mit Wasser wird daraus ein Färbebad von 200 T bereitet und dessen pH Wert mit 85%-iger wässeriger Ameisensäure auf 5 gestellt. In dieses Bad geht man bei 50° mit 10 T eines Diolen-Gewebes (Polyester) ein, steigert die Temperatur innert 30 Minuten in geschlossenem Gefäss auf 120° und dann innerhalb weiteren 10 Minuten auf 130°. Anschliessend wird gut gespült. Man erhält eine kräftige gelbe Färbung wobei der Farbstoff sehr gut aus dem Färbebad ausgezogen ist. Diese Färbung ist stabil und zeigt kein catalytic-fading.

Verwendet man anstelle des Farbstoffes gemäss Beispiel 1 einen Farbstoff gemäss der Beispiele 2 bis 3 oder eine Mischung aus 2 oder mehreren Farbstoffen gemäss den Beispielen 1 und 3, so erhält man ebenfalls sehr kräftige, echte Färbungen.

Beispiel 5: In 360 ml eines auf 60° vorgeheizten wässrigen Färbebades enthaltend 0,1 g des Farbstoffes gemäss Beispiel 1, 0,2 g eines Wollegalisiermittels, 0,72 g Ammonsulfat,1,08 g eines Carriers (auf Basis Trichlorbenzol) und mit 85%-iger wässriger Ameisensäure auf pH 5,5 gestellt, geht man mit 40 g eines Stoffwickels aus einem Polyester-Woll-Mischgewebe (55 % Polyesteranteil, 45 % Wollanteil, vorgewaschen, bei 140° getrocknet und 30 Sec. bei 180° thermofixiert) ein. (Pretema-Multicolor-Apparat). Man steigert die Temperatur dieses Färbebades während 30 Minuten auf 105° und färbt 45 Minuten bei dieser Temperatur. Anschliessend lässt man das Färbebad auf 80° abkühlen und spült das Färbegut 2 mal 5 Minuten bei 70° und 1 mal während 5 Minuten mit kaltem Wasser. Man erhält ein egal gelb gefärbtes Polyester-Woll-Mischgewebe welches eine sehr gute Reibechtheit aufweist.

<u>Beispiel 6:</u> 0,1 g eines Farbstoffpräparates enthaltend 0,052 g des Farbstoffes gemäss Beispiel 1 werden in 360 ml Wasser dispergiert. Zu dieser Dispersion gibt man 0,2 g eines Wollegalisiermittels, 1,6 g eines Wollschutzmittels, 0,72 g Natriumacetat, 0,36 g eines Carriers (auf Basis Trichlorbenzol) und stellt diese Dispersion mit wässeriger Essigsäure auf einen pH-Wert von ca. 5,5.

In dieses Färbebad geht man mit 40 g eines Polyester-Woll-Mischgewebes ein, steigert die Temperatur innert 30 Minuten auf 120° und färbt 40 Minuten bei dieser Temperatur. Anschliessend lässt man auf 80° abkühlen und spült das Färbegut gemäss den Angaben im Beispiel 5. Man erhält ein egal gelb gefärbtes Polyester-Woll-Mischgewebe welches eine sehr gute Reibechtheit aufweist.

Patentansprüche

1. Verbindungen der Formel I

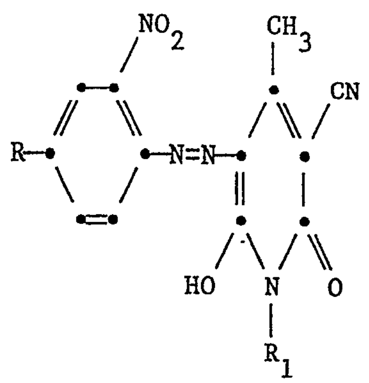

(I)

worin bedeuten:

R ein Halogenatom, und

$R_1$ einen unverzweigten $C_8$-, $C_{10}$- und $C_{12}$-Alkylrest.

2. Verbindungen gemäss Anspruch 1, dadurch gekennzeichnet, dass R ein Chloratom und $R_1$ einen unverzweigten $C_{10}$- oder $C_{12}$-Alkylrest bedeutet.

3. Verfahren zur Herstellung der Verbindungen der Formel I gemäss Anspruch 1, dadurch gekennzeichnet, dass man eine Diazokomponente der Formel II

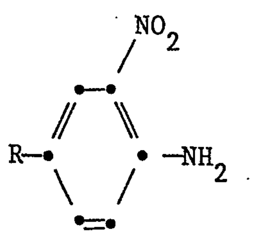

(II)

diazotiert und auf eine Kupplungskomponente der Formel III

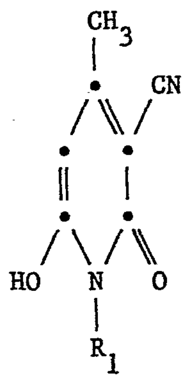

(III)

kuppelt, in welchen Formeln R und $R_1$ die unter Formel I angegebene Bedeutung haben.

4. Verwendung der Verbindungen gemäss den Ansprüchen 1 bis 2 bzw. der nach dem Verfahren von Anspruch 3 erhaltenen Verbindungen als Farbstoffe zum Färben und Bedrucken von halbsynthetischen, synthetischen hydrophobem Fasermaterial.

5. Verwendung gemäss Anspruch 4 zum Färben und Bedrucken von Polyestermaterialien.

0111450

Nummer der Anmeldung

Europäisches Patentamt

# EUROPÄISCHER RECHERCHENBERICHT

EP 83 81 0567

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| X | FR-A-2 038 228 (BASF) * Seite 4, Beispiel 7 * | 1,3-5 | C 09 B 29/42 // D 06 P 1/18 |
| P,X | EP-A-0 083 313 (CIBA-GEIGY) * Seiten 1,2; insbesondere, Tabelle, Beispiele "9" und "h" * | 1-5 | |
| P,X | EP-A-0 085 823 (CIBA-GEIGY) * Seite 1, Formel I; Seite 4, Zeile 2,3,5; Seite 8, insgesamt * | 1-5 | |
| P,A | FR-A-2 519 014 (SANDOZ) * Seite 1, Formel I * | 1,3-5 | |
| | | | RECHERCHIERTE SACHGEBIETE (Int. Cl. 3) |
| | | | C 09 B 29/00 |

Der vorliegende Recherchenbericht wurde für alle Patentansprüche erstellt.

| Recherchenort | Abschlußdatum der Recherche | Prüfer |
|---|---|---|
| DEN HAAG | 07-03-1984 | GREEN C.H. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82